# EUROPÄISCHE PATENTSCHRIFT

(11) **EP 0 824 879 B1**
(45) Veröffentlichungstag und Bekanntmachung des Hinweises auf die Patenterteilung: **17.03.1999**
(21) Anmeldenummer: 96113130.7
(22) Anmeldetag: 16.08.1996
(51) Int. Cl.: A45D 20/00, G05B 19/12

(54) **Elektronische Steuer- und elektronische Auswerteeinrichtung für die Haarbehandlung sowie Gerät zur Wärmebehandlung von Haaren**
Electronic control and evaluation device for hair treatment, and apparatus for heat treatment of hair
Dispositif électronique de commande et d'évaluation pour le traitement capillaire, et appareil pour le traitement capillaire par chaleur

(43) Veröffentlichungstag der Anmeldung: 25.02.1998
(73) Patentinhaber: OLYMP KARL HERZOG GmbH & Co., 70184 Stuttgart (DE)
(72) Erfinder: Reischle, Gunther, 78087 Mönchweiler (DE); Fiehn, Thomas, 70197 Stuttgart (DE)
(74) Vertreter: KOHLER SCHMID + PARTNER

(56) Entgegenhaltungen:
- EP-A- 0 504 866
- EP-A- 0 652 502
- FR-A- 2 658 444
- FR-A- 2 698 976
- GB-A- 2 251 960
- US-A- 4 766 913
- PATENT ABSTRACTS OF JAPAN vol. 016, no. 295 (C-0957), 30.Juni 1992 & JP-A-04 079906 (TAKARA BELMONT CO LTD), 13.März 1992,

## Beschreibung

Die Erfindung betrifft eine elektronische Steuereinrichtung für Funktionseinheiten eines Haarbehandlungsgerätes mit einer Rechnereinheit, welche mit wenigstens einem Datenspeicher mit Steuer-Ausgangsdaten sowie mit Funktionseinheiten des Haarbehandlungsgerätes in Verbindung steht und letztere in Abhängigkeit von den Steuer-Ausgangsdaten steuert, wobei die Steuer-Ausgangsdaten von außen veränderbar sind, indem der wenigstens eine Datenspeicher auf wenigstens einem, gegen wenigstens einen anderen Datenträger mit Datenspeicher austauschbaren Datenträger vorgesehen ist und wobei der wenigstens eine Datenträger wahlweise mit Funktionseinheiten des Haarbehandlungsgerätes kombinierbar ist.

Die Erfindung betrifft des weiteren ein Gerät zur Wärmebehandlung von Haaren.

Auch auf dem Gebiet der Haarbehandlung, insbesondere im Friseurbereich, hat in der Vergangenheit die Gerätetechnik mehr und mehr Einzug gehalten.

Bekannte Einrichtungen weisen fest installierte Datenspeicher auf, die ihrem Datenbestand nach optimal an die Bedürfnisse des Geräteanwenders angepaßt sind. In dem fest installierten Datenspeicher der gebräuchlichen elektronischen Steuereinrichtung sind Steuer-Ausgangsdaten dauerhaft und unveränderlich hinterlegt, welche die gängigen Haarbehandlungsarten berücksichtigen und eine auf die gewählte Haarbehandlungsart abgestimmte Steuerung der Funktionseinheiten des Haarbehandlungsgerätes gewährleisten. Speziell für die Dauerwellbehandlung steht eine elektronische Auswerteeinrichtung zur Verfügung, welche auf der Grundlage eingegebener Parameter des zu behandelnden Haars das zweckmäßigerweise anzuwendende Dauerwellpräparat aus den im Datenspeicher hinterlegten Präparaten auswählt. In Abhängigkeit von dem ausgewählten Präparat werden anschließend die für die Dauerwellbehandlung eingesetzten Funktionseinheiten des Haarbehandlungsgerätes, insbesondere dessen Heizstrahler, gesteuert. Auf die Optimierung der Dauerwellbehandlung ist ein besonderes Augenmerk vor dem Hintergrund gerichtet worden, daß diese Behandlungsart mit erheblichem Zeit- und Kostenaufwand verbunden ist und an den Perfektionsgrad des Behandlungsergebnisses aufgrund der diesem zukommenden Langzeitwirkung außerordentlich hohe Anforderungen gestellt werden.

Aufgrund ihrer umfassenden Abstimmung auf die bestehenden Bedürfnisse sind die gebräuchlichen Haarbehandlungsgeräte sowie die vorstehend beschriebenen Steuer- und Auswerteeinrichtungen in der Lage, die ihnen zukommenden Funktionen zur vollsten Zufriedenheit ihrer Anwender auszuüben.

Eine gattungsgemäße elektronische Steuereinrichtung ist aus der Druckschrift FR-U-2 658 444 bekannt. Zur Steuerung der Funktionseinheiten einer Haarschneidemaschine dient dabei ein Rechner, der auf zwei Datenträger mit Datenspeicher in Form einer Chipkarte sowie einer Diskette Zugriff hat. Die Chipkarte ermöglicht eine benutzerabhängige, die Diskette eine auf die gewünschte Frisur bezogene Steuerung der Haarschneidemaschine. Dementsprechend läßt sich mittels der aus dem Stand der Technik bekannten Steuereinrichtung ausschließlich eine benutzer- und gleichzeitig frisurabhängige Steuerung der Funktionseinheiten des zugehörigen Haarbehandlungsgerätes bewerkstelligen.

Ausgehend von dem gattungsgemäßen Stand der Technik liegt der vorliegenden Erfindung die Aufgabe zugrunde, die vorbekannte Steuereinrichtung hinsichtlich ihrer technischen Möglichkeiten weiterzuentwickeln und ein Gerät zur Wärmebehandlung von Haaren zu schaffen, das die erweiterten Möglichkeiten einer derartigen Steuereinrichtung nutzt.

Die auf die Steuereinrichtung bezogene Aufgabe wird erfindungsgemäß dadurch gelöst, daß im Falle einer elektronischen Steuereinrichtung der eingangs beschriebenen Art wenigstens ein austauschbarer Datenträger mit wenigstens einem Datenspeicher mit nach Herstellern von Haarbehandlungsmitteln kategorisierten Steuer-Ausgangsdaten vorgesehen ist. Die erfindungsgemäße Ausgestaltung einer elektronischen Steuereinrichtung für Funktionseinheiten eines Haarbehandlungsgerätes ist beispielsweise möglich, wenn die Produkte ein und desselben Herstellers unter bestimmten Gesichtspunkten, etwa in ihren Verarbeitungseigenschaften, vereinheitlicht sind. In diesem Fall ist der Umstand, daß ein Haarbehandlungsmittel von einem bestimmten Hersteller stammt, gleichbedeutend mit bestimmten für die Steuerung der Funktionseinheiten des Haarbehandlungsgerätes bedeutsamen Präparateigenschaften. Außerdem können auf einem austauschbaren, einem oder mehreren Herstellern zugeordneten Datenträger sämtliche oder eine Mehrzahl der von dem Hersteller bzw. den Herstellern angebotenen Präparate gespeichert sein, die jeweils bestimmte Verarbeitungseigenschaften aufweisen. In diesem Fall muß mittels der Rechnereinheit zunächst das verwendete Präparat ausgewählt und danach präparatabhängig gesteuert werden. Die durch das im Kennzeichnungsteil von Patentanspruch 1 genannte Merkmal verkörperte erfinderische Idee trägt den besonderen Gegebenheiten im Friseurbereich Rechnung. So sind die Hersteller von Haarbehandlungsmitteln bemüht, Friseurbetriebe umfassend mit Produkten aus ihrem Hause zu bedienen. Die beschriebene Ausbildung der erfindungsgemäßen Steuereinrichtung erlaubt es nun, die Friseurbetriebe, denen ein entsprechendes Haarbehandlungsgerät zur Verfügung steht, auf einfache Art und Weise in die Lage zu versetzen, die Produkte eines bestimmten Herstellers zu verarbeiten. Durch Kombination herstellerspezifischer austauschbarer Datenträger mit der elektronischen Steuereinrichtung läßt sich nämlich das zugehörige Haarbehandlungsgerät ohne weiteres entsprechend auslegen. Dadurch daß die Steuer-Ausgangsdaten in an sich bekannter Weise von außen veränderbar sind, kann die erfindungsgemäße Steuereinrichtung mit minimalem Aufwand an wechselnde Bedürfnisse angepaßt werden. Die elektronische Steuereinrichtung wird dadurch in der Gegenwart flexibel und entwicklungsfähig für die Zukunft und kann selbst dann noch benutzt werden, wenn sie Steueraufgaben zu übernehmen hat, die auf etwaigen zukünftigen Entwicklungen und Bedürfnissen beruhen und daher zum gegenwärtigen Zeitpunkt noch überhaupt nicht erkennbar sind. Der Austausch des Datenträgers ist problemlos von außen und damit bekanntermaßen ohne wesentliche Eingriffe in die Steuerungs-Hardware möglich.

Eine zweckmäßige Möglichkeit, auf die Steuer-Ausgangsdaten von außen Einfluß zu nehmen, ist im Falle einer bevorzugten Variante der erfindungsgemäßen Steuereinrichtung dadurch realisiert, daß der wenigstens eine Datenspeicher über wenigstens einen Datenanschluß von außen zugänglich ist.

Im Falle einer weiteren Variante der erfindungsgemäßen Steuereinrichtung ist vorgesehen, daß der wenigstens eine austauschbare Datenträger wenigstens einen Datenspeicher mit nach dem Benutzer des Haarbehandlungsgerätes kategorisierten Steuer-Ausgangsdaten aufweist. Dieses Merkmal ermöglicht eine auf den Benutzer des Gerätes, etwa auf den Friseurkunden, individuell abgestimmte Gerätesteuerung. Auf diesem Wege lassen sich jedwede den Benutzer betreffende Besonderheiten, beispielsweise dessen Wärmeempfindlichkeit, von vornherein berücksichtigen.

Ergänzend oder alternativ ist erfindungsgemäß vorgesehen, daß der wenigstens eine austauschbare Datenträger wenigstens einen Datenspeicher mit nach Art der durchzuführenden Haarbehandlung kategorisierten Steuer-Ausgangsdaten aufweist. Ein derart kategorisierter Datenträger versetzt die Steuereinrichtung in die Lage, die Funktionseinheiten des Haarbehandlungsgerätes in Abhängigkeit von der gewünschten Haarbehandlungsart zu steuern. Soll das Haar lediglich getrocknet werden, so wird durch entsprechende Ansteuerung von Lüfter- und Heizeinrichtungen für einen wirksamen Luftaustausch im Bereich des Haares unter gleichzeitiger Wärmezufuhr gesorgt. Bei einer Dauerwellbehandlung hingegen liegt der Schwerpunkt auf der Wärmezufuhr, während der Luftzirkulation eine lediglich nachrangige Bedeutung zukommt.

Eine bevorzugte Ausführungsform der erfindungsgemäßen Steuereinrichtung zeichnet sich dadurch aus, daß der wenigstens eine austauschbare Datenträger wenigstens einen Datenspeicher mit nach Haarbehandlungsmittel kategorisierten Steuer-Ausgangsdaten aufweist. In diesem Fall bestimmt das verwendete Präparat den Betrieb des Haarbehandlungsgerätes, das entsprechend den Verarbeitungseigenschaften des verwendeten Mittels gesteuert wird. Aufgrund der Austauschbarkeit des betreffenden Datenträgers können unter Zuhilfenahme einer erfindungsgemäßen Steuereinrichtung und mittels eines vorhandenen Haarbehandlungsgerätes auch etwaige künftig Bedeutung erlangende Haarbehandlungsmittel verarbeitet werden, auch wenn die derzeit zur Verfügung stehende Steuereinrichtung nicht in der Lage wäre, die Funktionseinheiten eines Haarbehandlungsgerätes in adäquater Art und Weise zu steuern. Die elektronische Steuereinrichtung und mit dieser das gesamte Haarbehandlungsgerät ist erfindungsgemäß demnach in die Lage versetzt, sich gemeinsam mit den Präparaten zur Haarbehandlung weiterzuentwickeln.

Die beschriebenen Kategorisierungen können miteinander kombiniert vorgenommen sein. So kann etwa von austauschbaren Datenträgern Gebrauch gemacht werden, auf denen neben Steuer-Ausgangsdaten, die nach Herstellern von Haarbehandlungsmitteln kategorisiert sind, Steuer-Ausgangsdaten hinterlegt sind, die gleichzeitig nach Haarbehandlungsmittel und Art der Haarbehandlung klassifiziert sind. Die erfindungsgemäße Steuereinrichtung steuert die Funktionseinheiten des zugehörigen Haarbehandlungsgerätes dann beispielsweise so, wie dies das etwa für die Dauerwellbehandlung eingesetzte Produkt X des Herstellers Y erfordert.

Der Flexibilisierung von Steuereinrichtungen für Haarbehandlungsgeräte und somit der Haarbehandlungsgeräte selbst dient es, daß - wie in Weiterbildung der Erfindung außerdem vorgesehen - der bzw. jeder austauschbare Datenträger eine Rechnereinheit aufweist. Die Rechnereinheit kann in diesem Fall in Abstimmung auf die zu verarbeitenden Steuer-Ausgangsdaten sowie die auf der Grundlage der Steuer-Ausgangsdaten auszuübenden Steuerfunktionen ausgelegt zur Verfügung gestellt werden. Das Haarbehandlungsgerät ist in diesem Fall lediglich noch als Grundgerät mit Funktionseinheiten ausgebildet.

In zweckmäßiger Weiterbildung der Erfindung ist der wenigstens eine austauschbare Datenträger als Steckkarte ausgebildet.

Im Sinne der Erfindung besteht die Möglichkeit, austauschbare Datenträger zu verwenden, die ihrerseits in ihrem Datenbestand veränderbar sind.

Eine bevorzugte Variante der erfindungsgemäßen Steuereinrichtung ist dadurch gekennzeichnet, daß sie eine elektronische Erfassungseinrichtung für Haarparameter umfaßt, welche über die Rechnereinheit mit dem wenigstens einen Datenspeicher auf dem wenigstens einen austauschbaren Datenträger in Verbindung steht, wobei die Rechnereinheit erfaßten Haarparametern Steuer-Ausgangsdaten zuordnet und in Abhängigkeit von letzteren die Funktionseinheiten des Haarbehandlungsgerätes steuert. Eine derartige Steuereinrichtung übernimmt neben der ihr zukommenden Steuerfunktion eine dieser im Verfahrensablauf vorgeschaltete Diagnosefunktion. Die erfaßten Haarparameter bilden dabei die Grundlage für die Gerätesteuerung. Bei entsprechender Kategorisierung von verwendeten austauschbaren Datenträgern kann den erfaßten Haarkenngrößen beispielsweise mittels der Rechnereinheit zunächst ein bestimmtes Haarbehandlungsmittel eines bestimmten Herstellers zugeordnet werden, das wiederum über zugehörige Steuer-Ausgangsdaten Art und Weise der Steuerung der Funktionseinheiten des Haarbehandlungsgerätes bestimmt.

Die vorstehend beschriebenen Vorteile erfindungsgemäßer Steuereinrichtungen ergeben sich entsprechend für erfindungsgemäße Geräte zur Wärmebehandlung von Haaren, die zur Lösung der eingangs angegebenen gerätebezogenen Aufgabe eine elektronische Steuereinrichtung nach einem der Ansprüche 1 bis 8 aufweisen.

Nachfolgend wird die Erfindung anhand schematischer Darstellungen zu einem Ausführungsbeispiel näher erläutert. Es zeigen:
- Fig. 1: ein Gerät zur Wärmebehandlung von Haaren (auschnittweise) mit der zugehörigen elektronischen Steuereinrichtung,
- Fig. 2: das Anzeige- und Bedienfeld der elektronischen Steuereinrichtung gemäß Fig. 1 und
- Fig. 3: einen Datenträger mit Datenanschluß.

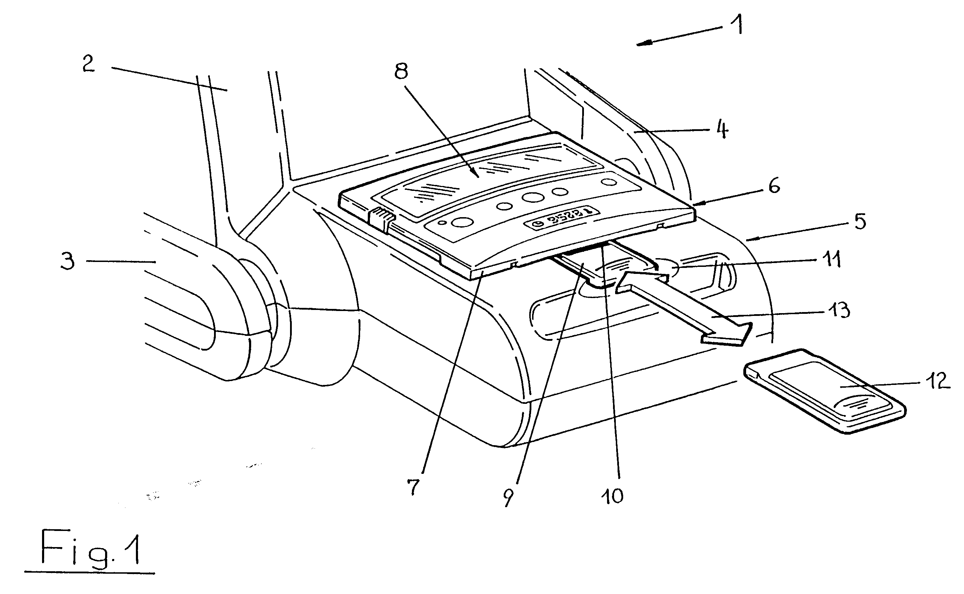

Wie in Figur 1 andeutungsweise erkennbar ist, umfaßt ein Gerät 1 zur Wärmebehandlung von Haaren eine den Kopf des Benutzers ausgehend von dessen Nackenbereich sichelartig überdeckende Haube 2 sowie sich beidseits des Kopfes des Benutzers erstreckende Arme 3, 4. Die Haube 2 sowie die Arme 3, 4 sind an ihren dem Benutzer zugewandten Seiten mit Heizstrahlern ausgerüstet. Als weitere Funktionseinheit weist das dargestellte Gerät 1 eine Lüftungseinrichtung auf. Ausgehend von dem unteren Ende der Haube 2 ragt ein kastenförmiges Gehäuse 5 zu der von dem Benutzer abgewandten Seite hin vor. In dem kastenförmigen Gehäuse 5 untergebracht ist eine elektronische Steuereinrichtung 6 mit einem Steuerungsgehäuse 7, das mit einem Anzeige- und Bedienfeld 8 versehen ist. Ein austauschbarer Datenträger 9 in Form einer Steckkarte ist durch eine schlitzartige Öffnung 10 des Steuerungsgehäuses 7 mit den übrigen Komponenten der elektronischen Steuereinrichtung 6 verbunden. Eine Griffmulde 11 an dem kastenförmigen Gehäuse 5 erleichtert die Handhabung der Steckkarte 9. Deren Austauschbarkeit gegen einen weiteren, als Steckkarte ausgebildeten austauschbaren Datenträger 12 wird durch einen Doppelpfeil 13 symbolisiert.

Die Steckkarten 9, 12 sind gehäuseartig ausgebildet und beinhalten jeweils eine Leiterplatte mit darauf aufgebrachter Rechnereinheit und mit dieser in Verbindung stehendem Datenspeicher. Dabei sind Rechnereinheit und Datenspeicher in Form eines Ein-Chip-Mikrocomputers ausgeführt. Dieser steuert die Einrichtungen des Anzeige- und Bedienfeldes 8 sowie die Funktionseinheiten des Gerätes 1.

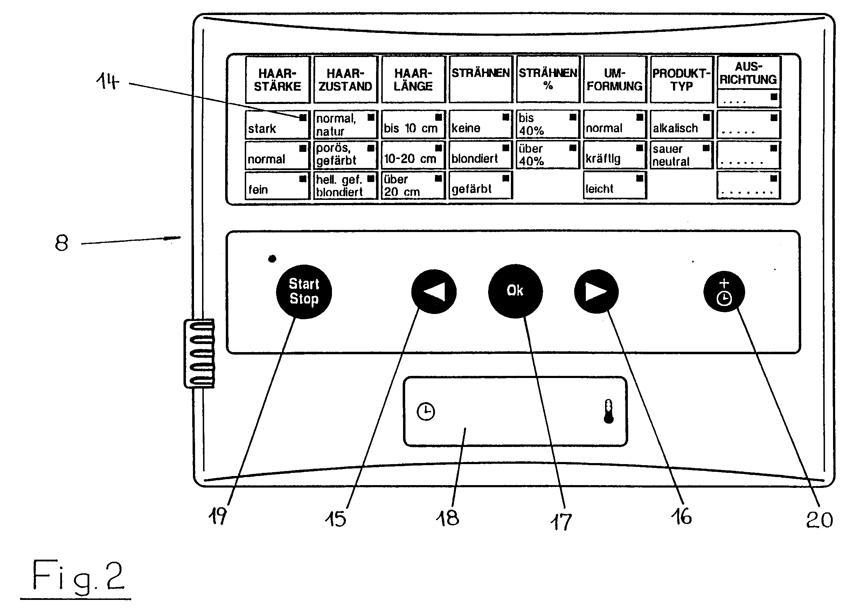

In dem dargestellten Beispielsfall umfaßt die elektronische Steuereinrichtung 6 unter anderem auch eine Erfassungseinrichtung für Haarparameter. In den Datenspeichern der Steckkarten 9, 12 sind Steuer-Ausgangsdaten betreffend die Haarbehandlungsmittel und zwar im vorliegenden Fall die Dauerwellenmittel jeweils eines bestimmten Herstellers hinterlegt. Dementsprechend ist auch das Anzeige- und Bedienfeld, das im einzelnen Fig. 2 zu entnehmen ist, auf Dauerwellbehandlung ausgelegt.

Im Betrieb werden nach Einschalten des Gerätes 1 bzw. der elektronischen Steuereinrichtung 6 zunächst die Parameter des zu behandelnden Haares abgefragt. Zu diesem Zweck werden Leuchtfelder 14 des Anzeige- und Bedienfeldes 8 beginnend mit dem Leuchtfeld 14 "HAARSTÄRKE/stark" illuminiert. Mittels Pfeiltasten 15, 16 kann zu jedem Parameter die zutreffende Charakterisierung angewählt werden.

Ist das zu behandelnde Haar etwa als "normal" einzustufen, so ist nach der Inbetriebnahme des Gerätes 1 die Pfeiltaste 16 einmal zu drücken. Anstelle des ursprünglich illuminierten Leuchtfeldes 14 zu "HAARSTÄRKE/stark" leuchtet nunmehr das Leuchtfeld 14 zu "HAARSTÄRKE/normal" auf. Durch Drücken einer Bestätigungstaste 17 wird das Merkmal des zu behandelnden Haares erfaßt. Die Abfrage des Haarparameters "HAARSTÄRKE" ist damit beendet. Es schließt sich in entsprechender Art und Weise die Abfrage der Haarparameter "HAARZUSTAND", "HAARLÄNGE", "STRÄHNEN" bzw. "STRÄHNEN%" und "UMFORMUNG" an. In der vorstehend beschriebenen Art und Weise werden jeweils die auf das zu behandelnde Haar zutreffenden Eigenschaften angewählt und erfaßt. Anschließend hat der Bediener die Möglichkeit unter "PRODUKTTYP" eine Vorauswahl unter den zur Verfügung stehenden Dauerwellenmitteln zu treffen.

Auf der Grundlage der erfaßten Haarparameter sowie unter Berücksichtigung der hinsichtlich des Dauerwellenmittels getroffenen Vorauswahl bestimmt die Rechnereinheit der elektronischen Steuereinrichtung 6 das zweckmäßigerweise zu verwendende Haarbehandlungsmittel. Dabei greift der Rechner auf die im Datenspeicher der in Gebrauchslage befindlichen Steckkarte 9 enthaltenen und die Präparate eines bestimmten Herstellers betreffenden Daten zurück. In der mit "AUSRICHTUNG" überschriebenen Spalte des Anzeige- und Bedienfeldes 8 wird das von der Rechnereinheit als geeignet ermittelte Präparat angezeigt. In dem dargestellten Beispielsfall bestehen 4 Präparatmöglichkeiten, deren geeignete durch Illuminieren des betreffenden Leuchtfelds markiert wird. Alternativ kann ein Display vorgesehen sein, in welchem der Name des ausgewählten Produkts erscheint. Gleichzeitig ermittelt die Rechnereinheit die zur Verarbeitung des ausgewählten Haarbehandlungsmittels erforderliche Temperatur sowie die benötigte Behandlungsdauer. Die beiden letztgenannten Informationen erscheinen in einem Sichtfenster 18.

Ist das in der beschriebenen Art und Weise bestimmte Präparat auf dem zu behandelnden Haar aufgebracht und hat der Benutzer unter der Haube 2 Platz genommen, so kann durch Betätigen einer Start-Stop-Taste 19 die Haarbehandlung in Gang gesetzt werden. Auf der Grundlage der ihm zur Verfügung stehenden Steuer-Ausgangsdaten steuert nun die Rechnereinheit die Funktionseinheiten des Gerätes 1. Dabei sorgt die Rechnereinheit für die Einstellung der zur Verarbeitung des gewählten Haarbehandlungsmittels erforderlichen Temperatur und sorgt nach Ablauf der zuvor bestimmten Einwirkdauer für das Abschalten des Gerätes.

Sofern sich nach Ablauf der eingestellten Behandlungsdauer das Bearbeitungsergebnis noch nicht in der gewünschten Perfektion eingestellt hat, kann durch Betätigen einer Nachwirktaste 20 die Haarbehandlung für eine vorgegebene kurze Nachwirkdauer erneut aufgenommen werden. Auch diese Funktion wird von der Rechnereinheit gesteuert.

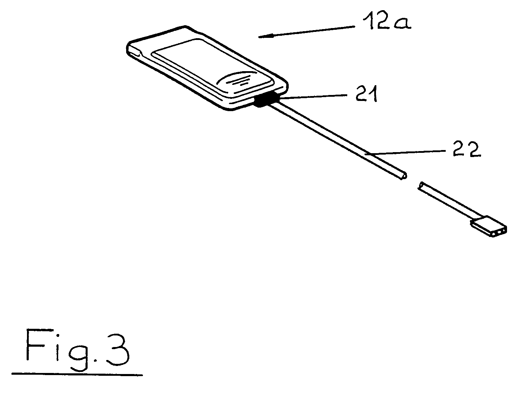

Fig. 3 zu entnehmen ist ein austauschbarer Datenträger in Form einer Steckkarte 12a, die in ihrem Aufbau den vorstehend beschriebenen Steckkarten 9, 12 entspricht. Im Gegensatz zu letzteren weist die Steckkarte 12a jedoch einen Datenanschluß 21 in Form eines Schnittstellensteckers auf. Über diesen und eine gezeigte Datenleitung 22 lassen sich die auf der Steckkarte 12a hinterlegten Steuer-Ausgangsdaten verändern. Die im vorliegenden Fall abgespeicherten Daten von Dauerwellenmitteln eines bestimmten Herstellers können beispielsweise durch Überspielen von Daten zu neuentwickelten Präparaten aktualisiert werden. Ebenso ist es möglich, die auf der Steckkarte 12a vorhandenen Daten zu löschen und durch andere Daten, beispielsweise Daten einer anderen Kategorisierung, zu ersetzen.

Bei Verwendung eines austauschbaren Datenträgers der in Fig. 3 gezeigten Art erfährt die zugehörige elektronische Steuereinrichtung eine Flexibilisierung in doppelter Hinsicht. So kann die elektronische Steuereinrichtung bereits durch Einsatz eines austauschbaren Datenträgers als solchen an wechselnde Bedürfnisse angepaßt werden. Der Datenträger wiederum ist in seinem Datenbestand veränderbar und läßt sich dadurch ebenfalls auf sich ändernde Steuerungsaufgaben abstimmen.

## Patentansprüche

1. Elektronische Steuereinrichtung für Funktionseinheiten eines Haarbehandlungsgerätes (1) mit einer Rechnereinheit, welche mit wenigstens einem Datenspeicher mit Steuer-Ausgangsdaten sowie mit Funktionseinheiten des Haarbehandlungsgerätes (1) in Verbindung steht und letztere in Abhängigkeit von den Steuer-Ausgangsdaten steuert, wobei die Steuer-Ausgangsdaten von außen veränderbar sind, indem der wenigstens eine Datenspeicher auf wenigstens einem, gegen wenigstens einen anderen Datenträger (9, 12, 12a) mit Datenspeicher austauschbaren Datenträger (9, 12, 12a) vorgesehen ist und wobei der wenigstens eine Datenträger (9, 12, 12a) wahlweise mit Funktionseinheiten des Haarbehandlungsgerätes (1) kombinierbar ist, gekennzeichnet durch wenigstens einen austauschbaren Datenträger (9, 12, 12a) mit wenigstens einem Datenspeicher mit nach Herstellern von Haarbehandlungsmitteln kategorisierten Steuer-Ausgangsdaten.

2. Elektronische Steuereinrichtung nach Anspruch 1, dadurch gekennzeichnet, daß der wenigstens eine Datenspeicher über wenigstens einen Datenanschluß (21) von außen zugänglich ist.

3. Elektronische Steuereinrichtung nach einem der vorhergehenden Ansprüche, dadurch gekennzeichnet, daß der wenigstens eine austauschbare Datenträger (9, 12, 12a) wenigstens einen Datenspeicher mit nach dem Benutzer des Haarbehandlungsgerätes kategorisierten Steuer-Ausgangsdaten aufweist.

4. Elektronische Steuereinrichtung nach einem der vorhergehenden Ansprüche, dadurch gekennzeichnet, daß der wenigstens eine austauschbare Datenträger (9, 12, 12a) wenigstens einen Datenspeicher mit nach Art der durchzuführenden Haarbehandlung kategorisierten Steuer-Ausgangsdaten aufweist.

5. Elektronische Steuereinrichtung nach einem der vorhergehenden Ansprüche, dadurch gekennzeichnet, daß der wenigstens eine austauschbare Datenträger (9, 12, 12a) wenigstens einen Datenspeicher mit nach Haarbehandlungsmittel kategorisierten Steuer-Ausgangsdaten aufweist.

6. Elektronische Steuereinrichtung nach einem der vorhergehenden Ansprüche, dadurch gekennzeichnet, daß der bzw. jeder austauschbare Datenträger (9, 12, 12a) eine Rechnereinheit aufweist.

7. Elektronische Steuereinrichtung nach einem der vorhergehenden Ansprüche, dadurch gekennzeichnet, daß der wenigstens eine austauschbare Datenträger (9, 12, 12a) als Steckkarte (9, 12, 12a) ausgebildet ist.

8. Elektronische Steuereinrichtung nach einem der vorhergehenden Ansprüche, dadurch gekennzeichnet, daß sie eine elektronische Erfassungseinrichtung für Haarparameter umfaßt, welche über die Rechnereinheit mit dem wenigstens einen Datenspeicher auf dem wenigstens einen austauschbaren Datenträger (9, 12, 12a) in Verbindung steht, wobei die Rechnereinheit erfaßten Haarparametern Steuer-Ausgangsdaten zuordnet und in Abhängigkeit von letzteren die Funktionseinheiten des Haarbehandlungsgerätes (1) steuert.

9. Gerät zur Wärmebehandlung von Haaren, gekennzeichnet durch eine elektronische Steuereinrichtung nach einem der Ansprüche 1 bis 8.

## Claims

1. Electronic control device for functional units of a hair treatment apparatus (1), having a computer unit which is connected to at least one data store having basic control data and to functional units of the hair treatment apparatus (1) and which controls those functional units in accordance with the basic control data, the basic control data being alterable externally by providing the at least one data store on at least one data carrier (9, 12, 12a) exchangeable for at least one other data carrier (9, 12, 12a) having a data store, and it optionally being possible to combine the at least one data carrier (9, 12, 12a) with functional units of the hair treatment apparatus (1), characterised by at least one exchangeable data carrier (9, 12, 12a) having at least one data store having basic control data categorised in accordance with manufacturers of hair treatment agents.

2. Electronic control device according to claim 1, characterised in that the at least one data store is accessible externally via at least one data connection (21).

3. Electronic control device according to either of the preceding claims, characterised in that the at least one exchangeable data carrier (9, 12, 12a) has at least one data store having basic control data categorised in accordance with the user of the hair treatment apparatus.

4. Electronic control device according to any one of the preceding claims, characterised in that the at least one exchangeable data carrier (9, 12, 12a) has at least one data store having basic control data categorised in accordance with the type of hair treatment to be carried out.

5. Electronic control device according to any one of the preceding claims, characterised in that the at least one exchangeable data carrier (9, 12, 12a) has at least one data store having basic control data categorised in accordance with the hair treatment agent.

6. Electronic control device according to any one of the preceding claims, characterised in that the or each exchangeable data carrier (9, 12, 12a) has a computer unit.

7. Electronic control device according to any one of the preceding claims, characterised in that the at least one exchangeable data carrier (9, 12, 12a) is in the form of a plug-in card (9, 12, 12a).

8. Electronic control device according to any one of the preceding claims, characterised in that it comprises an electronic acquisition device for hair parameters which is connected via the computer unit to the at least one data store on the at least one exchangeable data carrier (9, 12, 12a), the computer unit associating basic control data with acquired hair parameters and, in accordance with the basic control data, controlling the functional units of the hair treatment apparatus (1).

9. Apparatus for the heat treatment of hair, characterised by an electronic control device according to any one of claims 1 to 8.

## Revendications

1. Dispositif électronique de commande d'unités fonctionnelles d'un appareil (1) de traitement capillaire, avec une unité de calcul, qui est reliée à au moins une mémoire de données pourvue de données de commande ainsi qu'à des unités fonctionnelles de l'appareil (1) de traitement capillaire, et qui commande ces unités en fonction des données de commande, les données de commande pouvant être modifiées de façon externe par le fait que la ou les mémoires de données sont prévues sur au moins un support de données (9, 12, 12a) pouvant être remplacé par au moins un autre support de données (9, 12, 12a) doté de mémoire(s) de données, et le ou les supports de données (9, 12, 12a) pouvant être combinés de façon sélective à des unités fonctionnelles de l'appareil (1) de traitement capillaire, **caractérisé** par au moins un support interchangeable de données (9, 12, 12a) doté d'au moins une mémoire de données pourvue de données de commande cassées par fabricants de produits de traitement capillaire.

2. Dispositif électronique de commande selon la revendication 1, **caractérisé** en ce que la ou les mémoires de données sont accessibles de façon externe par l'intermédiaire d'au moins une connexion de données (21).

3. Dispositif électronique de commande selon une des revendications précédentes, **caractérisé** en ce que le ou les supports interchangeables de données (9, 12, 12a) présentent au moins une mémoire de données pourvue de données de commande cassées par usagers de l'appareil de traitement capillaire.

4. Dispositif électronique de commande selon une des revendications précédentes, **caractérisé** en ce que le ou les supports interchangeables de données (9, 12, 12a) présentent au moins une mémoire de données pourvue de données de commande cassées par types de traitement capillaire à effectuer.

5. Dispositif électronique de commande selon une des revendications précédentes, **caractérisé** en ce que le ou les supports interchangeables de données (9, 12, 12a) présentent au moins une mémoire de données pourvue de données de commande cassées par produits de traitement capillaire.

6. Dispositif électronique de commande selon une des revendications précédentes, **caractérisé** en ce que le ou chaque support interchangeable de données (9, 12, 12a) présente une unité de calcul.

7. Dispositif électronique de commande selon une des revendications précédentes, **caractérisé** en ce que le ou les supports interchangeables de données (9, 12, 12a) sont réalisés sous la forme de cartes enfichables (9, 12, 12a).

8. Dispositif électronique de commande selon une des revendications précédentes, **caractérisé** en ce qu'il comprend un dispositif électronique d'enregistrement de paramètres capillaires, qui est relié par l'intermédiaire de l'unité de calcul à la ou les mémoires de données sur le ou les supports interchangeables de données (9, 12, 12a), l'unité de calcul associant aux paramètres capillaires enregistrés des données de commande, et commandant en fonction de ces dernières les unités fonctionnelles de l'appareil (1) de traitement capillaire.

9. Appareil pour le traitement capillaire par chaleur, **caractérisé** par un dispositif électronique de commande selon l'une des revendications 1 à 8.
